# EUROPEAN PATENT SPECIFICATION

(11) **EP 2 431 487 B1**
(45) Date of publication and mention of the grant of the patent: **21.09.2016**
(21) Application number: 10774913.7
(22) Date of filing: 11.05.2010
(51) Int. Cl.: C22C 1/10, C03B 5/43, C22C 5/04

(54) **OXIDE-DISPERSION-STRENGTHENED PLATINUM MATERIAL AND MANUFACTURING METHOD THEREFOR**
OXIDDISPERSIONSVERSTÄRKTES PLATINMATERIAL UND HERSTELLUNGSVERFAHREN DAFÜR
MATERIAU A BASE DE PLATINE RENFORCE PAR DISPERSION D'OXYDES ET SON PROCEDE DE FABRICATION

(30) Priority: 13.05.2009 JP 2009116971
(43) Date of publication of application: 21.03.2012
(73) Proprietor: Tanaka Kikinzoku Kogyo K.K., Chiyoda-ku Tokyo 100-6422 (JP)
(72) Inventor: YAMASAKI, Haruki, Isehara-shi Kanagawa 259-1146 (JP)
(74) Representative: Klunker . Schmitt-Nilson . Hirsch
(86) International application number: PCT/JP2010/057969
(87) International publication number: WO 2010/131656

(56) References cited:
- EP-A2- 0 320 877
- JP-A- 1 224 182
- JP-A- 3 219 030
- JP-A- 5 277 761
- JP-A- 53 048 907
- JP-A- H05 277 761
- JP-A- 2006 299 334
- JP-T- 8 503 023

## Description

### BACKGROUND OF THE INVENTION

### FIELD OF THE INVENTION

The present invention relates to an oxide-dispersion-strengthened platinum material used as a structural material of a glass-melting apparatus used for melting and handling glass for optical glass, an optical fiber, and the like.

### DESCRIPTION OF THE RELATED ART

A strengthened platinum material excellent in high-temperature strength properties has been used as a component of a glass-melting apparatus used for melting glass. With respect to the glass-melting apparatus, there is known a technique in which glass is melted in a platinum crucible vessel alone or a technique in which glass is melted in a platinum crucible vessel covered with refractories on the outside.

In the case where glass is melted in a platinum crucible vessel alone, the molten glass has to be held only by the platinum crucible vessel. Therefore, a strengthened platinum material excellent in high-temperature strength properties is used for the platinum crucible vessel. Further, a platinum crucible vessel made of a conventional platinum material such as Pt, Pt-5% Rh, or Pt-10% Rh is often employed for the platinum crucible vessel covered with refractories on the outside because the refractories hold the crucible vessel.

With respect to the glass-melting apparatus in which a platinum crucible vessel is used alone, the physical properties of the strengthened platinum material are very important because the life of the strengthened platinum material which constitutes the crucible vessel is essentially the life of the apparatus as it is. Further, with respect to the glass-melting apparatus provided with a platinum crucible vessel covered with refractories on the outside, the difference in the coefficient of expansion and contraction between a platinum material and refractories causes phenomena of the creep rupture of the platinum crucible vessel and the break of the crucible vessel by the occurrence of wrinkles when the platinum crucible vessel is stretched by the weight of molten glass, leading to troubles in production.

A conventionally known oxide-dispersion-strengthened platinum material generally has a high creep strength, but it tends to have a small elongation percentage at break. Further, a conventional platinum material has a relatively high elongation percentage at break, but it has relatively poor high-temperature creep strength properties. From such a reason, there is proposed a composite strengthened platinum material in which an oxide-dispersion-strengthened platinum material is combined with a platinum material as one of the strengthened platinum materials (refer to Patent Literature 1). Further, there is also proposed a multilayer strengthened platinum material in which a plurality of plate-shaped oxide-dispersion-strengthened platinum materials are laminated and bonded (refer to Patent Literature 2).
JP 2006 299 334 A discloses a laminated platinum sheet material which contains an oxide dispersion. Typically, 5 to 20 layers of the platinum containing oxide dispersion are put together and then roll bonded. All laminated layers are oxide-dispersion-strengthened platinum layers.

### Prior Art Documents

### Patent Literature

Patent Literature 1: Japanese Patent No. 2859484
Patent Literature 2: Japanese Patent Application Laid-Open No. Hei 1-224182

### SUMMARY OF THE INVENTION

### Problems to be Solved by the Invention

The composite strengthened platinum material in Patent Literature 1 is a material in which a platinum material having a relatively coarse structure is simply combined with an oxide-dispersion-strengthened platinum material, and this material has better high-temperature creep properties than the platinum material alone but is not satisfactory in the elongation percentage at break. On the other hand, the multilayer strengthened platinum material in Patent Literature 2 is a material in which the oxide-dispersion-strengthened platinum material is rolled into a thin plate, and a plurality of the plates are laminated and bonded at high temperatures. However, since the material is composed only of the oxide-dispersion-strengthened platinum material, it can achieve improvement in creep strength, but it was difficult to expect improvement in elongation percentage at break.

The present invention has been made under these circumstances and provides an oxide-dispersion-strengthened platinum material having high strength, excellent high-temperature creep properties, and high elongation properties and a technique for producing the same.

### Means for Solving the Problems

Subject matter of the present invention is an oxide-dispersion-strengthened platinum material and a method for producing an oxide-dispersion-strengthened platinum material as defined in the independent claims. Embodiments of the invention are claimed in the respective dependent claims.

The present invention relates to an oxide-dispersion-strengthened platinum material having a structure comprising concentrated layers in which an additive metal for oxide-dispersion strengthening or a metal oxide thereof is concentrated and platinum layers essentially consisting of platinum in which the additive metal or the metal oxide thereof is dilute, the concentrated layers and the platinum layers being alternately laminated in six pairs or more. In the present invention, the state where the concentrated layer and the platinum layer are laminated is referred to as a "pair", and six pairs represents the state where the "pairs" each composed of the concentrated layer and the platinum layer are laminated in six stages.

In the following, the concentrated layers in which an additive metal for oxide-dispersion-strengthening or a metal oxide thereof is concentrated are referred to as oxide-dispersion-strengthened platinum layers, and the platinum layers essentially consisting of platinum in which the additive metal or the oxide thereof is dilute are referred to as platinum layers.

Since the oxide-dispersion-strengthened platinum material of the present invention has a structure comprising oxide dispersion strengthened platinum layers and platinum layers, the oxide dispersion strengthened layers and the platinum layers being alternately laminated in six pairs or more, it is a material having a certain degree of elongation properties, in spite of having high strength. As a conventional strengthened platinum material, there is known, for example, an oxide-dispersion-strengthened platinum material in which zirconium is used as an additive metal and zirconium oxide is uniformly dispersed in a platinum matrix phase. Such a conventional strengthened platinum material has such properties that the strength is practically satisfactory but the elongation is very low. Therefore, if such a conventional strengthened platinum material is used for a crucible vessel or the like of a glass-melting apparatus, the crucible vessel cannot be sufficiently deformed by a load to the crucible vessel caused by the weight of molten glass. This will lead to troubles in production such as a crack produced in the crucible vessel to cause a sudden breakage thereof. However, the oxide-dispersion-strengthened platinum material of the present invention has a certain degree of elongation properties, in spite of having high strength. Therefore, even if a load caused by the weight of molten glass is applied to the crucible vessel, the crucible vessel will be deformed to a certain degree to suppress the occurrence of cracks to make it possible to effectively prevent the breakage or the like of the crucible vessel.

Although the reason why such strength properties are shown is not clear, the grain boundary of platinum particles which is considered as the cause of the occurrence of cracks is probably divided in the plate thickness direction to effectively suppress the occurrence of cracks, because in the oxide-dispersion-strengthened platinum material according to the present invention, the platinum layer is in a state where it is pinched by the oxide dispersion strengthened layers. Moreover, the oxide-dispersion-strengthened platinum material according to the present invention is estimated to have a certain degree of elongation properties because it includes not only the concentrated layers, that is, the oxide-dispersion-strengthened platinum layers but also the platinum layers.

The oxide-dispersion-strengthened platinum material according to the present invention has a structure in which the oxide dispersion strengthened layers and the platinum layers are alternately laminated in at least six pairs or more. This is because if the layers are alternately laminated in five pairs or less, the number of the platinum layers pinched by the oxide dispersion strengthened layers is too small to effectively suppress the occurrence of cracks. This lamination state is desirably ten pairs or more. When the layers are alternately laminated in ten pairs or more, the resulting oxide-dispersion-strengthened platinum material will have high strength, excellent high-temperature creep properties, and high elongation properties.

The applicable additive metal for forming the oxide dispersion strengthened layer in the oxide-dispersion-strengthened platinum material of the present invention includes zirconium, yttrium, and samarium. Further, the applicable metal oxide includes zirconium oxide, yttrium oxide, and samarium oxide.

The oxide-dispersion-strengthened platinum material according to the present invention can have the outermost surface thereof that is prepared from the same material. For example, when the outermost surface is made of the platinum layer, a substance that is an impurity to glass will not be easily leached, and hence it is preferred. Alternatively, if the outermost surface is made of the oxide dispersion strengthened layer, the resulting material will be excellent in strength properties such as an abrasive property, and hence it is preferred. That is, in the oxide-dispersion-strengthened platinum material according to the present invention, it is possible to select the platinum layer or the oxide dispersion strengthened layer as the outermost surface depending on the applications and purposes of the material. Naturally, the surface of one side may be made of the platinum layer, and the surface of the other side may be made of the oxide dispersion strengthened layer.

The oxide-dispersion-strengthened platinum material according to the present invention can be obtained by the following production method, as one approach. The method for producing an oxide-dispersion-strengthened platinum material of the present invention comprises the steps of: (1) combining an oxide-dispersion-strengthened platinum plate and a platinum plate and subjecting the combination to integral bonding treatment by hot pressing to form a laminate; (2) subjecting the laminate to hot forging, followed by rolling; (3) stacking a plurality of the rolled laminates and subjecting the stack to integral bonding treatment by hot pressing to form a multilayer laminate; and (4) subjecting the multilayer laminate to hot forging, followed by rolling. According to the present invention, it is possible to easily produce a composite strengthened platinum material which has a high elongation percentage at high temperatures and is excellent in high-temperature creep properties.

In the step (1) of the production method of the present invention, it is preferred to set the weight of the oxide-dispersion-strengthened platinum plate and the platinum plate before combining these plates so as to make the weight ratio of the oxide-dispersion-strengthened platinum plate and the platinum plate which constitute the oxide-dispersion-strengthened platinum material finally obtained be 1:20 to 20:1. If the ratio of the platinum plate is too high, the strength will tend to be reduced, and if the ratio of the oxide-dispersion-strengthened platinum plate is too high conversely, the elongation percentage will tend to be reduced. When the weight ratio is 1:20 to 20:1, both strength and elongation percentage will be suitable. A more preferred weight ratio is 1:20 to 2:1.

In the step (3) of the production method of the present invention, it is preferred to stack the laminates so as to make the rolling directions of the laminates be orthogonal to each other. When the laminates are stacked so as to make the rolling directions of the laminates be orthogonal to each other, the lamination structure of the oxide-dispersion-strengthened platinum material finally obtained will be uniform as a whole, which allows the strength properties of the oxide-dispersion-strengthened platinum material to be uniform throughout the material.

In the step (3) of the production method of the present invention, at least six or more laminates are stacked, preferably ten or more laminates. When six or more laminates are stacked so as to make platinum layers and oxide dispersion strengthened layers be stacked in order, the platinum layers and the oxide dispersion strengthened layers will be alternately present in 12 or more layers in total, which allows a material capable of effectively suppressing the occurrence of cracks to be produced. Further, when ten or more laminates are stacked, the platinum layers and the oxide dispersion strengthened layers will be alternately present in 20 or more layers in total, which allows an oxide-dispersion-strengthened platinum material having high strength, high-temperature creep properties, and high elongation properties to be produced.

In the rolling in the step (2) of the production method of the present invention, the reduction ratio is preferably 85% or more. If the reduction ratio is less than 85% in rolling the laminate or the multilayer laminate, the bonding between the oxide-dispersion-strengthened platinum plate and the platinum plate which have been laminated will weaken, and the strength of the resulting oxide-dispersion-strengthened platinum material will tend to be reduced.

The hot pressing in the present invention is preferably performed at a temperature of 800°C to 1200°C and a pressure of 15 to 50 MPa. If the temperature is lower than 800°C, the bonding between the oxide-dispersion-strengthened platinum plate and the platinum plate will be insufficient, and if the temperature exceeds 1200°C, a phenomenon in which platinum adheres to a tool of a hot press apparatus will easily occur. Further, if the pressure is less than 15 MPa, the bonding between the oxide-dispersion-strengthened platinum plate and the platinum plate will be insufficient, and if the pressure exceeds 50 MPa, the breakage of a tool made from carbon used in a hot press apparatus will easily occur.

Moreover, this hot pressing is preferably performed twice, and in doing so, it is preferred that the second hot-pressing conditions be changed from the first hot-pressing conditions. Specifically, the change in conditions refers to changing the shape of the tip surfaces of a punch rod and a pedestal in hot pressing. In the first hot pressing, the curvature radius of the tip surfaces of the punch rod and the pedestal is preferably 1000 to 4000 mm, and in the second hot pressing, the curvature radius of the tip surfaces is preferably 5000 mm or more, or the tip surfaces are preferably plane. This is because the bonding between the oxide-dispersion-strengthened platinum plate and the platinum plate can be ensured by performing hot pressing twice on such conditions.

### Advantageous Effects of Invention

The present invention can provide an oxide-dispersion-strengthened platinum material excellent in high-temperature creep properties and having high elongation properties and allows such an oxide-dispersion-strengthened platinum material to be easily produced. As a result, it is possible to effectively prevent a sudden breakage trouble or the like of a crucible vessel which has occurred in a conventional glass-melting apparatus.

### BRIEF DESCRIPTION OF THE DRAWINGS

Fig. 1 is a photograph of the cross-sectional structure of Example 1 after the completion of working.
Fig. 2 is a photograph of the cross-sectional structure of Example 1 after heat treatment at 1400°C for 24 hours.
Fig. 3 is a photograph of the cross-sectional structure of Example 1 after heat treatment at 1400°C for 100 hours.
Fig. 4 is a photograph of the cross-sectional structure of Comparative Example 1.
Fig. 5 is a photograph of the cross-sectional composition distribution of Example 1 with SIMS.
Fig. 6 is a photograph of the cross-sectional composition distribution of Example 1 with SIMS.

### BEST MODE FOR CARRYING OUT THE INVENTION

### Examples

Hereinafter, the best mode of the present invention will be described based on Examples to be described below.

### Example 1

As the materials of Example 1, there were used a platinum rolled material (118 mm in length × 118 mm in width × 25 mm in thickness (7.5 kg): trade name T-1, manufactured by Tanaka Kikinzoku Kogyo K.K., a Pt purity of 99.95%) and an oxide-dispersion-strengthened platinum plate using zirconium oxide as a dispersed particle (118 mm in length × 118 mm in width × 6 mm in thickness (1.8 kg); trade name GTH, manufactured by Tanaka Kikinzoku Kogyo K.K., 99.90% Pt, 0.10% Zr).

Each one of these materials was stacked to each other and the stack was charged into a hot-press machine. The pressure inside the furnace was reduced to 0.6 Pa, and the stack was subjected to hot pressing under the conditions of a furnace temperature of 1000°C and a pressing pressure of 20 tons to produce a laminate. A punch rod and a pedestal used in this hot-press machine were made from graphite (ISO63) with a size of 120 mm in length × 120 mm in width × 200 mm in thickness and had a curvature radius of the tip surface of 3600 mm.

The laminate formed by the hot pressing was held in a 1300°C electric furnace for 30 minutes and then taken out, and subjected to forging treatment by striking the laminate three times with a 500-ton air hammer. Subsequently, the forged laminate was charged into the 1300°C electric furnace again and subjected to annealing treatment for 30 minutes.

The laminate after the annealing treatment was subjected to rolling treatment (at a reduction ratio of 95%) so as to have a size of 125 mm in length × 1250 mm in width × 1.2 mm in thickness. The rolled laminate was cut to produce a plurality of laminates each having a size of 119 mm in length × 119 mm in width × 1.2 mm in thickness.

Subsequently, 18 rolled laminates were prepared, and 9 of them were stacked with the platinum plate side facing downwardly and alternately rotated by 90° with respect to each other so as to make the rolling directions be orthogonal to each other. On top of the resulting laminate was stacked a platinum rolled material (119 mm in length × 119 mm in width × 1 mm in thickness (the same composition as that of the above material: trade name T-1)), and on top thereof, the remaining 9 laminates were stacked with the oxide-strengthened platinum plate side facing downwardly and alternately rotated by 90° with respect to each other so as to make the rolling directions be orthogonal to each other.

Then, the 18 laminates (and one platinum rolled material) stacked as described above were charged into the hot-press machine in which the pressure was reduced to 0.6 Pa, and were subjected to hot pressing under the conditions of a furnace temperature of 1000°C and a pressing pressure of 20 tons to produce a multilayer laminate. The punch rod and the pedestal used at this time in the hot-press machine were made from graphite (ISO63) with a size of 120 mm in length × 120 mm in width × 200 mm in thickness and had a curvature radius of the tip surface of 3600 mm.

Then, the multilayer laminate cooled and taken out after the hot pressing was charged again into the hot-press machine in which the pressure was reduced to 0.6 Pa, and was subjected to hot pressing under the conditions of a furnace temperature of 1000°C and a pressing pressure of 50 tons. The punch rod and the pedestal used at this time in the hot-press machine were made from graphite (ISO63) with a size of 120 mm in length × 120 mm in width × 200 mm in thickness and had a flattened (plane) tip. This hot pressing was performed twice (22.5 mm in thickness).

The multilayer laminate for which hot pressing was performed twice was held in a 1300°C electric furnace for 60 minutes and then taken out, and subjected to forging treatment by striking the multilayer laminate three times with a 500-ton air hammer. Subsequently, the forged multilayer laminate was charged into the 1300°C electric furnace again and subjected to annealing treatment for 30 minutes.

Finally, the multilayer laminate after the annealing treatment was subjected to the following rolling treatment so as to have a size of 500 mm in length × 500 mm in width × 1.2 mm in thickness. The first rolling was performed with a reduction ratio of 76%, and then the second rolling was performed with a reduction ratio of 78%, wherein the second rolling direction was orthogonal to the first rolling direction, thus producing an oxide-dispersion-strengthened platinum plate of Example 1. The oxide-dispersion-strengthened platinum plate of Example 1 was used to perform a test for creep properties, a high-temperature tensile test, and an observation of cross-sectional structure.

### Example 2

The same laminate as in Example 1 was used in Example 2. The laminate after the annealing treatment was subjected to rolling treatment (at a reduction ratio of 85%) so as to have a size of 125 mm in length × 1250 mm in width × 4.5 mm in thickness. The rolled laminate was cut to produce six laminates each having a size of 118 mm in length × 118 mm in width × 4.5 mm in thickness.

Three of the six laminates were stacked with the platinum plate side facing downwardly and alternately rotated by 90° with respect to each other so as to make the rolling directions be orthogonal to each other. On top of the resulting laminate was stacked a platinum rolled material (119 mm in length × 119 mm in width × 3.6 mm in thickness/trade name T-1: the same composition as in the case of Example 1), and on top thereof, the remaining three laminates were stacked with the oxide-strengthened platinum plate side facing downwardly and alternately rotated by 90° with respect to each other so as to make the rolling directions be orthogonal to each other. Then, the six laminates (and one platinum rolled material) stacked as described above were subjected to hot pressing twice under the same conditions as in Example 1 to produce a multilayer laminate (having a thickness of 30.6 mm).

Then, the multilayer laminate for which hot pressing had been performed twice was subjected to forging treatment by striking the multilayer laminate three times with an air hammer under the same conditions as in Example 1. Subsequently, the forged multilayer laminate was charged into the 1300°C electric furnace again and subjected to annealing treatment for 30 minutes.

The multilayer laminate after the annealing treatment was subjected to the following rolling treatment so as to have a size of 500 mm in length × 500 mm in width × 1.2 mm in thickness. The first rolling was performed with a reduction ratio of 76%, and then the second rolling was performed with a reduction ratio of 78%, wherein the second rolling direction was orthogonal to the first rolling direction, thus producing an oxide-dispersion-strengthened platinum plate of Example 2. The oxide-dispersion-strengthened platinum plate of Example 2 was used to perform a test for creep properties, a high-temperature tensile test, and an observation of cross-sectional structure.

### Comparative Example 1

In Comparative Example 1, the laminate as described in Example 1 (a material comprising one platinum rolled material and one oxide-dispersion-strengthened platinum plate and subjected to hot pressing, forging treatment with an air hammer, and rolling treatment) was used as a sample of Comparative Example 1. The sample of Comparative Example 1 was used to perform an observation of cross-sectional structure, a test for creep properties, and a high-temperature tensile test.

### Comparative Example 2

The same laminate as in Example 1 was used in Comparative Example 2. The laminate after the annealing treatment was subjected to rolling treatment (at a reduction ratio of 77%) so as to have a size of 125 mm in length × 1250 mm in width × 6.8 mm in thickness. The rolled laminate was cut to produce four laminates each having a size of 118 mm in length × 118 mm in width × 6.8 mm in thickness.

Two of the four laminates were stacked with the platinum plate side facing downwardly and alternately rotated by 90° with respect to each other so as to make the rolling directions be orthogonal to each other. On top of the resulting laminate was stacked a platinum rolled material (119 mm in length × 119 mm in width × 5.5 mm in thickness/trade name T-1: the same composition as in the case of Example 1), and on top thereof, the remaining two laminates were stacked with the oxide-strengthened platinum plate side facing downwardly and alternately rotated by 90° with respect to each other so as to make the rolling directions be orthogonal to each other. Then, the four laminates (and one platinum rolled material) stacked as described above were subjected to hot pressing twice under the same conditions as in Example 1 to produce a multilayer laminate (having a thickness of 32.7 mm).

Then, the multilayer laminate for which hot pressing was performed twice was subjected to forging treatment by striking the multilayer laminate three times with an air hammer under the same conditions as in Example 1. Subsequently, the forged multilayer laminate was charged into the 1300°C electric furnace again and subjected to annealing treatment for 30 minutes.

The multilayer laminate after the annealing treatment was subjected to the following rolling treatment so as to have a size of 500 mm in length × 500 mm in width × 1.2 mm in thickness. The first rolling was performed with a reduction ratio of 76%, and then the second rolling was performed with a reduction ratio of 78%, wherein the second rolling direction was orthogonal to the first rolling direction, thus producing an oxide-dispersion-strengthened platinum plate of Comparative Example 2. The oxide-dispersion-strengthened platinum plate of Comparative Example 2 was used to perform a test for creep properties, a high-temperature tensile test, and an observation of cross-sectional structure.

Next, the results of the creep test and the high-temperature tensile test will be described. First, with respect to the creep test, creep test pieces (test pieces for JIS13B tensile test) were obtained from each sample of Examples 1 and 2 and Comparative Examples 1 and 2, and these test pieces were subjected to stress rupture (creep) test at a constant load in a 1400°C temperature atmosphere. The test was performed at measuring loads of 5 MPa and 3.5 MPa. Further, in this creep test, the creep was measured for two cases, that is, a case where the tensile load was applied in the rolling direction in which final rolling treatment was performed (referred to as X-direction), and a case where the tensile load was applied in the direction perpendicular to the rolling direction (referred to as Y-direction). Table 1 shows the results. Note that Table 1 includes, as a reference, the data in the case where only an oxide-dispersion-strengthened platinum plate (trade name GTH) is used.

**[Table 1]**

| | Creep test (rupture time, hr) | | | |
|---|---|---|---|---|
| | 5 MPa | | 3.5 MPa | |
| | X-direction | Y-direction | X-direction | Y-direction |
| Example 1 | 21.4 | 27.2 | 170.2 | 214.4 |
| Example 2 | 19.2 | 20.5 | 161.3 | 190.6 |
| Comparative Example 1 | 12.5 | 4.5 | 78.0 | 22.4 |
| Comparative Example 2 | 13.4 | 6.3 | 92.1 | 38.8 |
| (GTH) | Not ruptured | ← | ← | ← |

Further, with respect to the high-temperature tensile test, tensile test pieces having a thickness of 1.2 mm and a width of 4.96 mm were prepared, and the test was performed at a gauge length of 20.0 mm, a tensile rate of 0.1 mm/s, and a test temperature of 1400°C. The results of the high-temperature tensile test are shown in Table 2. Note that Table 2 also includes, as a reference, the data for the oxide-dispersion-strengthened platinum plate (trade name GTH).

**[Table 2]**

| | High-temperature tensile test (elongation percentage, %) |
|---|---|
| Example 1 | 72 |
| Example 2 | 68 |
| Comparative Example 1 | 50 |
| Comparative Example 2 | 53 |
| (GTH) | 24 |

The results in Tables 1 and 2 have proven that creep rupture strength for Examples 1 and 2 is equal or more, or is higher by nearly 2 to 10 times, compared with that for Comparative Example 1, and that the high-temperature elongation percentages for Examples 1 and 2 are higher by 1.5 times or more compared with that for Comparative Example 1. Further, for Comparative Example 2, high-temperature tensile strength was not considerably high, and creep rupture strength was a significantly low value as compared with that for Examples 1 and 2. In addition, when compared with GTH, the elongation percentage for Examples 1 and 2 was about 3 times that of GTH, and in the case of Examples 1 and 2, it was proven that the samples had a high elongation percentage while maintaining high-temperature creep rupture strength.

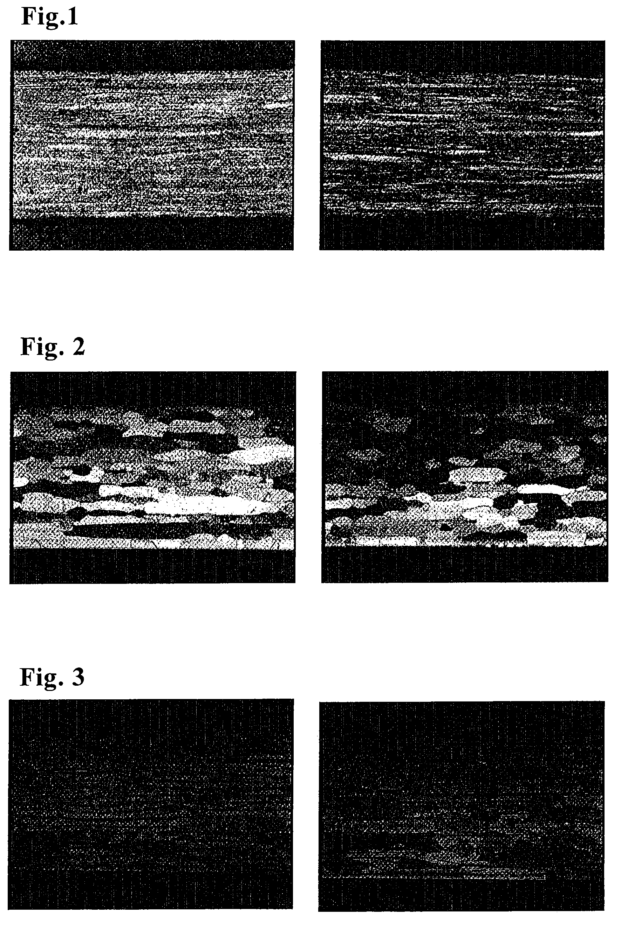

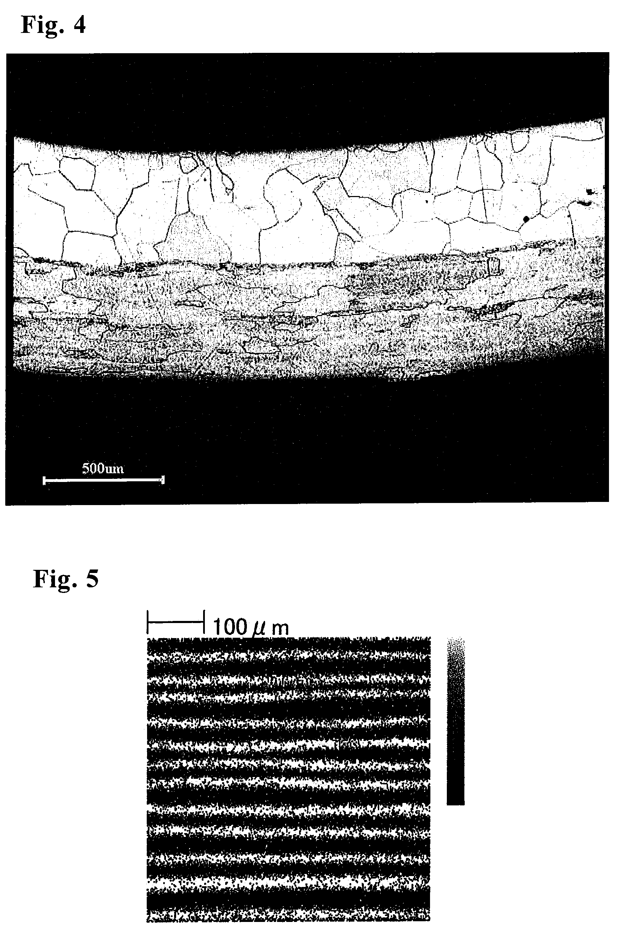

Subsequently, the results of the observations of cross-sectional structure will be described. Three types of the samples of Example 1, that is, after the completion of working, after heat treatment at 1400°C for 24 hours (Fig. 2), and after heat treatment at 1400°C for 100 hours (Fig. 3) were observed for the cross section in the rolling direction in which final rolling treatment was performed (X-direction) (the sectional photograph on the left side of Fig. 1, the same for Figs. 2 and 3) and for the cross section in the direction perpendicular to the rolling direction (Y-direction) (the sectional photograph on the right side of Fig. 1, the same for Figs. 2 and 3). The results are shown in Figs. 1 to 3. Further, the cross-sectional observation of the sample of Comparative Example 1 (after heat treatment at 1400°C for 24 hours) was also performed (Fig. 4).

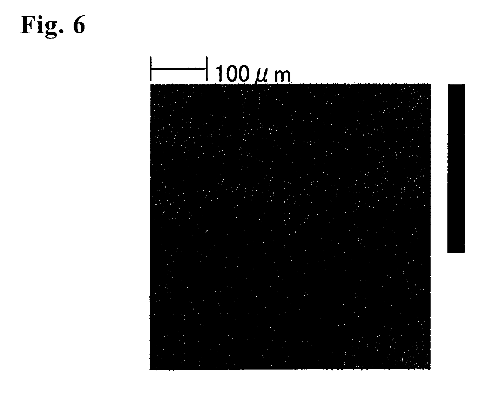

Further, with respect to Example 1, the concentration distribution states of zirconium and platinum on the cross section were examined with a secondary ion mass spectrometer (SIMS, performed by the analysis request to Foundation for Promotion of Material Science and Technology of Japan). The results are shown in Figs. 5 and 6. Fig. 5 shows the results of the examination of the distribution of zirconium, and Fig. 6 shows the results of the examination of the distribution state of platinum. As shown in Fig. 6, it was verified that platinum was distributed all over the observed cross section and the matrix phase of the composite strengthened platinum material of Example 1 was platinum. Further, as shown in Fig. 5, a state was observed in which zirconium was distributed as a layered segregation in the platinum matrix phase (the white part in the parts seen in a layered state is a part in which zirconium is distributed in high concentration).

Further, as shown in Fig. 4, it was found that the sample of Comparative Example 1 was clearly divided into two layers: the part of the platinum plate (a platinum layer, the part where a relatively large structure in the upper part of the photograph is seen) and the part of the oxide-dispersion-strengthened platinum plate (a "concentrated" layer, the part of the structure which is visible on the lower side of the photograph). Further, it was verified that, in the platinum layer of Comparative Example 1, the growth of platinum particles advanced also in the plate thickness direction, and the grain boundary of the platinum particles was continued in the plate thickness direction. On the other hand, it was proven that, in the case of Example 1, although the sample was in a layered state as shown in Figs. 1 to 3, the structure was in the same state even if the cross-sectional direction to be observed was different. Further, as shown in Fig. 5, it was verified that the part in which zirconium oxide which is dispersed particles is present ("concentrated" layer) and the part without dispersed particles (platinum layer) were in a layered state. For this reason, it was estimated that, in the cross-sectional structure of Example 1, dispersed particles in a layered state suppressed the growth of the platinum particles in the plate thickness direction in the platinum layer and advanced the growth of the platinum particles by recrystallization in the rolling direction to form a structure in which platinum particles having a large aspect ratio were deposited in a layered state.

### Industrial Applicability

It is possible to effectively prevent a sudden breakage trouble or the like of a crucible vessel which has occurred in a glass-melting apparatus.

## Claims

1. An oxide-dispersion-strengthened platinum material, wherein said platinum material has a structure comprising platinum layers and oxide-dispersion-strengthened platinum layers, the oxide-dispersion-strengthened platinum layers comprising an additive metal for oxide-dispersion strengthening or a metal oxide thereof, the platinum layers and the oxide-dispersion-strengthened platinum layers being alternately laminated in six pairs or more.

2. The oxide-dispersion-strengthened platinum material according to claim 1, wherein the outermost surface is the platinum layer or the oxide-dispersion-strengthened platinum layer.

3. A method for producing an oxide-dispersion-strengthened platinum material having a structure comprising platinum layers and oxide-dispersion-strengthened platinum layers, the oxide-dispersion-strengthened platinum layers comprising an additive metal for oxide-dispersion strengthening or a metal oxide thereof, the platinum layers and the oxide-dispersion-strengthened platinum layers being alternately laminated in six pairs or more,
the method comprising the steps of:
(1) combining an oxide-dispersion-strengthened platinum plate and a platinum plate and subjecting the combination to integral bonding treatment by hot pressing to form a laminate;
(2) subjecting the laminate to hot forging, followed by rolling;
(3) stacking a plurality of the rolled laminates and subjecting the stack to integral bonding treatment by hot pressing to form a multilayer laminate; and
(4) subjecting the multilayer laminate to hot forging, followed by rolling.

4. The method for producing an oxide-dispersion-strengthened platinum material according to claim 3, wherein, in the step (1), before combining the oxide-dispersion-strengthened platinum plate and the platinum plate, the weight of these plates are set so as to make the weight ratio of the oxide-dispersion-strengthened platinum plate and the platinum plate which constitute the oxide-dispersion-strengthened platinum material finally obtained be 1:20 to 20:1.

5. The method for producing an oxide-dispersion-strengthened platinum material according to claim 3 or 4, wherein, in the step (3), the laminates are stacked so as to make the rolling directions of the laminates be orthogonal to each other.

6. The method for producing an oxide-dispersion-strengthened platinum material according to any of claims 3 to 5, wherein, in the step (3), six or more laminates are stacked.

7. The method for producing an oxide-dispersion-strengthened platinum material according to any of claims 3 to 6, wherein, in the rolling in the step (2), the reduction ratio is 85% or more.

8. The method for producing an oxide-dispersion-strengthened platinum material according to any of claims 3 to 7, wherein the hot pressing is performed at a temperature of 800°C to 1200°C and a pressure of 15 to 50 MPa.

## Patentansprüche

1. Oxid-dispersionsgehärtetes Platinmaterial, wobei das Platinmaterial eine Struktur hat, die Platinschichten und oxid-dispersionsgehärtete Platinschichten aufweist, wobei die oxid-dispersionsgehärteten Platinschichten ein Zusatzmetall zur Oxid-Dispersionshärtung oder ein Metalloxid davon aufweisen, wobei die Platinschichten und die oxid-dispersionsgehärteten Platinschichten alter-nierend in sechs oder mehr Paaren laminiert sind.

2. Oxid-dispersionsgehärtetes Platinmaterial nach Anspruch 1, wobei die äußerste Oberfläche die Platinschicht oder die oxid-dispersionsgehärtete Platinschicht ist.

3. Verfahren zur Herstellung eines oxid-dispersionsgehärteten Platinmaterials mit einer Struktur, die Platinschichten und oxid-dispersionsgehärtete Platinschichten aufweist, wobei die oxid-dispersionsgehärteten Platinschichten ein Zusatzmetall zur Oxid-Dispersionshärtung oder ein Metalloxid davon aufweisen, wobei die Platinschichten und die oxid-dispersionsgehärteten Platinschichten alternierend in sechs oder mehr Paaren laminiert sind,
wobei das Verfahren folgende Schritte aufweist:
(1) Kombinieren einer oxid-dispersionsgehärteten Platinplatte und einer Platinplatte und Unterziehen der Kombination einer Behandlung zur einstückigen Verbindung durch Heißpressen, um ein Laminat zu bilden;
(2) Unterziehen des Laminats einem Warmschmieden, gefolgt von Walzen;
(3) Stapeln einer Mehrzahl der gewalzten Laminate und Unterziehen des Stapels einer Behandlung zur einstückigen Verbindung durch Heißpressen, um ein Vielschicht-Laminat zu bilden; und
(4) Unterziehen des Vielschicht-Laminats einem Warmschmieden, gefolgt von Walzen.

4. Verfahren zur Herstellung eines oxid-dispersionsgehärteten Platinmaterials nach Anspruch 3, wobei in Schritt (1), vor dem Kombinieren der oxid-dispersionsgehärteten Platinplatte und der Platinplatte, das Gewicht dieser Platten so festgelegt wird, dass das Gewichtsverhältnis der oxid-disepersionsgehärteten Platinplatte und der Platinplatte, die das schließlich erhaltene oxid-dispersionsgehärtete Platinmaterial ausmachen, 1:20 bis 20:1 beträgt.

5. Verfahren zur Herstellung eines oxid-dispersionsgehärteten Platinmaterials nach Anspruch 3 oder 4, wobei in Schritt (3) die Laminate so gestapelt werden, dass die Walzrichtungen der Laminate orthogonal zueinander sind.

6. Verfahren zur Herstellung eines oxid-dispersionsgehärteten Platinmaterials nach einem der Ansprüche 3 bis 5, wobei in Schritt (3) sechs oder mehr Laminate gestapelt werden.

7. Verfahren zur Herstellung eines oxid-dispersionsgehärteten Platinmaterials nach einem der Ansprüche 3 bis 6, wobei bei dem Walzen in Schritt (2) der Walzreduzierungsgrad 85% oder mehr beträgt.

8. Verfahren zur Herstellung eines oxid-dispersionsgehärteten Platinmaterials nach einem der Ansprüche 3 bis 7, wobei das Heißpressen bei einer Temperatur vom 800°C bis 1200°C und bei einem Druck von 15 bis 50 MPa durchgeführt wird.

## Revendications

1. Matériau à base de platine renforcé par dispersion d'oxydes, dans lequel ledit matériau à base de platine a une structure comprenant des couches de platine et des couches de platine renforcé par dispersion d'oxydes, les couches de platine renforcé par dispersion d'oxydes comprenant un métal additif pour le renforcement par dispersion d'oxydes ou un oxyde métallique de celui-ci, les couches de platine et les couches de platine renforcé par dispersion d'oxydes étant alternativement laminées en six paires ou plus.

2. Matériau à base de platine renforcé par dispersion d'oxydes selon la revendication 1, dans lequel la surface externe est la couche de platine ou la couche de platine renforcé par dispersion d'oxydes.

3. Procédé de production d'un matériau à base de platine renforcé par dispersion d'oxydes présentant une structure comprenant des couches de platine et des couches de platine renforcé par dispersion d'oxydes, les couches de platine renforcé par dispersion d'oxydes comprenant un métal additif pour le renforcement par dispersion d'oxydes ou un oxyde métallique de celui-ci, les couches de platine et les couches de platine renforcé par dispersion d'oxydes étant alternativement laminées en six paires ou plus,
le procédé comprenant les étapes :
(1) de combinaison d'une plaque de platine renforcé par dispersion d'oxydes et d'une plaque de platine, et la soumission de la combinaison à un traitement de liaison intégral par diffusion pour former un laminé ;
(2) de soumission du laminé à un forgeage à chaud, suivi d'un laminage ;
(3) d'empilement d'une pluralité de laminés et de soumission de l'empilement à un traitement de liaison intégral par pressage à chaud pour former un laminé multicouches ; et
(4) de soumission du laminé multicouches à un forgeage à chaud, suivi d'un laminage.

4. Procédé de production d'un matériau à base de platine renforcé par dispersion d'oxydes selon la revendication 3, dans lequel, à l'étape (1), avant combinaison de la plaque de platine renforcé par dispersion d'oxydes et de la plaque de platine, le poids de ces plaques est défini de manière à ce que le rapport du poids de la plaque de platine renforcé par dispersion d'oxydes et de la plaque de platine constituant le matériau à base de platine renforcé par dispersion d'oxydes finalement obtenu, soit compris entre 1:20 et 20:1.

5. Procédé de production d'un matériau à base de platine renforcé par dispersion d'oxydes selon la revendication 3 ou 4, dans lequel, à l'étape (3), les laminés sont empilés, afin que les directions de laminage soient orthogonales.

6. Procédé de production d'un matériau à base de platine renforcé par dispersion d'oxydes selon l'une quelconque des revendications 3 à 5, dans lequel, à l'étape (3), six laminés ou plus sont empilés.

7. Procédé de production d'un matériau à base de platine renforcé par dispersion d'oxydes selon l'une quelconque des revendications 3 à 6, dans lequel, au cours de l'étape de laminage (2), le rapport de réduction est de 85 % ou plus.

8. Procédé de production d'un matériau à base de platine renforcé par dispersion d'oxydes selon l'une quelconque des revendications 3 à 7, dans lequel le pressage à chaud est réalisé à une température comprise entre 800°C et 1200°C et à une pression comprise entre 15 et 50 MPa.
